# EUROPEAN PATENT APPLICATION

(11) **EP 4 717 787 A1**
(43) Date of publication of application: **01.04.2026**
(21) Application number: 24861535.3
(22) Date of filing: 10.05.2024
(51) Int. Cl.: C22C 30/00, B22F 1/10, B22F 3/10, B22F 3/15, B22F 3/24, B22F 7/08

(54) **ACTIVATING AGENT, PREFABRICATED PASTE, PREFABRICATED MEMBER AND PROCESS FOR REPAIRING THIN-WALL-PENETRATING DEFECTS**

(30) Priority: 05.09.2023 CN 202311135402
(71) Applicant: Dongfang Electric Corporation Dongfang Turbine Co., Ltd., Deyang, Sichuan 618000 (CN)
(72) Inventor: GONG, Xiufang, City Deyang, Sichuan 618000 (CN); GAO, Zhenhuan, City Deyang, Sichuan 618000 (CN); NIE, Liping, City Deyang, Sichuan 618000 (CN); LI, Jinqi, City Deyang, Sichuan 618000 (CN); GUAN, Yingbo, City Deyang, Sichuan 618000 (CN); PEI, Yubing, City Deyang, Sichuan 618000 (CN); WANG, Tianjian, City Deyang, Sichuan 618000 (CN); LONG, Bin, City Deyang, Sichuan 618000 (CN); LUO, Chao, City Deyang, Sichuan 618000 (CN); SUN, Youbei, City Deyang, Sichuan 618000 (CN); FANG, Yu, City Deyang, Sichuan 618000 (CN)
(74) Representative: Santarelli
(86) International application number: PCT/CN2024/092171
(87) International publication number: WO 2025/050686

(57) **Abstract**

The present invention relates to the field of the repairing of high-temperature blades of gas turbines. Disclosed are an activating agent,prefabricated paste, prefabricated member and process for repairing thin-wall-penetrating defects.The activating agent
at least comprises the following elements in percentage by mass:
7.1-9.8%of Cr,15.2-19.8%of Co,2.5-4.3%of Al,0.2-1.7%ofW, 6.2-8.7%of Ti,
5.6-7.8%of Ta,5.6-8.8%of Mo,2.7-4.2%of Ru,5.6-7.8%of Hf,0.07-0.15%of Zr,
0.10-0.15%of C,and 0.01-0.05%of Sc.The prefabricated paste is prepared by blending the activating agent,a curing agent and a binding agent.The prefabricated member is made of the prefabricated paste.The processcomprises the steps of polishing of a defect,forming of a prefabricated member,trimming of the prefabricated member,aditive-manufacturing-based repairing of the defect,and post-treatment.In the present invention,a repair area has a structure close to that of a substrate and can adapt to the high-temperature working environment of a blade,and the mechanical strength of ajoint is high;therefore,the cracking and deformation of the thin wall of the blade caused by a high heat input are effectively avoided,an air channel is prevented from being blocked,and the problem of a thin-wall-penetrating defect of a nickel-based high-temperature alloy blade being difficult to repair is solved.

## Description

### Technical Field

The present invention relates to the field of repair of gas turbine high-temperature blades, in particular to an activator, pre-made paste, pre-made part and process for repairing thin-wall through defects.

### Background of the Invention

Nickel-based superalloy blades are the core components for manufacturing heavy-duty gas turbines, known as the "aorta" of turbine components, mainly used for extracting the energy after gas combustion, and the working temperature is extremely harsh. Especially for the first-stage turbine blades, they have to withstand the impact of high-temperature airflow close to 1,400°C, which is far beyond the heat-resistant limit of the nickel-based superalloy itself (about 1,100°C), so effective cooling measures must be adopted to ensure the reliable operation of the blades in a high-temperature environment. Adopting a composite film cooling hollow structure is an effective cooling method to enable the blades to meet the high-temperature and high-pressure working conditions. When the blades are in service, the cooling air circulates inside to take away heat, and at the same time, it escapes through the film holes on the blades to form a film to isolate the high temperature, so as to reduce the surface temperature of the turbine blades during the working process.

During the long-term service of high-temperature blades, foreign object impact, airflow scouring, thermal fatigue, etc., can easily cause shape and property damage failures such as cracking, ablation, and material reduction of the blade base material. If these damages occur in the thin-wall part of the hollow blade, they often cause damage to the thin wall. Due to the poor weldability of nickel-based superalloys, the process window of fusion welding repair is particularly narrow, and it is even more difficult to repair the thin wall of the blade. High heat input can easily cause the thin wall to deform. Although large-gap brazing or powder metallurgy repair techniques can effectively avoid the occurrence of welding cracks, these repair techniques need to introduce more low-melting-point brazing filler metals during the repair process. When repairing the through defects on the thin wall of the blade, the brazing filler metal will flow into the blade air passage after liquefaction, causing air passage blockage and damaging the structure of the hollow blade.

### Summary of the Invention

The objective of the present invention is: in view of the above problems, to provide an activator, pre-made paste, pre-made part and process for repairing thin-wall through defects, so that the microstructure of the repair area is close to that of the base material, it can adapt to the high-temperature working environment of the blade, the mechanical property strength of the joint is high, the cracking and deformation of the thin wall of the blade caused by high heat input are effectively avoided, the air passage blockage is prevented, and the problem of difficult repair of the thin-wall through defects of nickel-based superalloy blades is solved.

The technical solution adopted by the present invention is as follows: An activator for repairing thin-wall through defects, the preparation of the activator comprises elements in at least the following percentages by mass:
Cr (7.1%-9.8%), Co (15.2%-19.8%), Al (2.5%-4.3%), W (0.2-1.7), Ti (6.2%-8.7%), Ta (5.6%-7.8%), Mo (5.6%-8.8%), Ru (2.7%-4.2%), Hf (5.6%-7.8%), Zr (0.07%-0.15%), C (0.10%-0.15%), Sc (0.01%-0.05%), balance Ni and/or incidental impurities.

Furthermore, the melting point temperature of the activator is 1,131°C to 1,160°C.

Furthermore, the activator is in powder form, with a particle size ranging from 30 µm to 53 µm, and is prepared by an atomization method.

A pre-made paste for repairing thin-wall through defects, the pre-made paste is in paste form, and is prepared by mixing the activator for repairing thin-wall through defects, the curing agent and the binder in a required proportion; wherein:
The curing agent is M-21 or Mar-M004 commercial alloy powder with a particle size in the range of 85 µm to 106 µm; the binder is of the NICROBRAZ S-BINDR commercial type; the mass of the activator accounts for 40% to 50%, the mass of the binder accounts for 3% to 5%, and the balance is the curing agent.

A pre-made part for repairing thin-wall through defects, the pre-made paste for repairing thin-wall through defects is made into a pre-made part by using a mold.

Particularly, a ceramic mold is used. Place the pre-made paste in the ceramic mold and spread it evenly with a thickness of 5 mm-9 mm; then place the ceramic mold with the pre-made paste in a vacuum furnace with a vacuum degree better than 1×10⁻³ Pa for sintering. The vacuum furnace provides a vacuum environment. The sintering temperature is 1,140°C to 1,170°C, and the sintering time is 10 min to 15 min; after sintering, lower the temperature in the vacuum furnace to 1,000°C to 1,050°C for hot isostatic pressing treatment. During the hot isostatic pressing treatment, the pressure in the vacuum furnace is 10 MPa to 20 MPa, and the heat-preservation time of the hot isostatic pressing treatment is 30 min to 60 min. After the hot isostatic pressing treatment, cool with the furnace to form a pre-made part. The thickness of the pre-made part is about 3 mm to 7 mm.

A process for repairing thin-wall through defects, the process is used to repair the thin-wall through defects on hollow thin-wall blades with a base material of precipitation-strengthened nickel-based cast superalloys such as Mar-M247, MGA2400, GTD444, and comprises the following steps:
S1: Defect grinding;
   Mechanically grind the through defect area to remove the oxide layer, and at the same time, grind the area around the through defect into a groove. The slope of the groove should be less than 60°. The length × width of the ground groove should not exceed 20 mm × 10 mm. The thickness of the thin-wall at the through defect should be within 2 mm to 5 mm. After grinding, place it in an alcohol or acetone solution for ultrasonic cleaning for 60 min, take it out and dry it for later use.
S2: Pre-made part forming; produce the pre-made part for repairing thin-wall through defects;
S3: Pre-made part shaping;
   According to the specific dimensions of the groove formed after defect grinding in step S1, grind and shape the pre-made part in step S2. **The** thickness of the shaped pre-made part is 0.5 mm to 1 mm thicker than the thickness of the thin wall at the through defect. **The** lower surface of the pre-made part should be flush with the end face of the small diameter end of the groove, that is, the upper surface of the shaped pre-made part should be 0.5 mm-1 mm higher than the end face of the large diameter end of the groove; the rest of the pre-made part should match the shape and size of the groove; place the ground and shaped pre-made part in an alcohol or acetone solution for ultrasonic cleaning for 60 min, take it out and dry it for later use.
S4: Defect material addition;
   The pre-made part, having undergone shaping in step S3, is assembled into the groove prepared in step S1. Subsequently, it is subjected to a metallurgical soaking process in a vacuum furnace with a vacuum level superior to 1×10⁻³ Pa. The soaking process is conducted at a temperature between 1,190°C and 1,210°C for a duration of 45 minutes to 60 minutes, followed by furnace cooling.
S5: Post-treatment;
   After the metallurgical heat preservation and cooling in step S4 are completed, carry out a performance restoration heat treatment on the blade, shape it to remove the excess metal in the repair area, that is, complete the morphological and property remodeling of the defect.

In summary, by virtue of the aforementioned technical solutions, the present invention offers the following beneficial effects:
1. Compared with traditional repair materials, the activator disclosed by the present invention does not increase the concentration of B, Si, and Zr as a melting-point depressant, but achieves alloy high-entropy by adjusting the mass ratio between the strengthening elements of the superalloy, thereby suppressing the melting point of the activator to within the range allowed by the process; therefore, the repair area obtained by applying the pre-made part of the present invention does not contain low-melting-point B-rich, Si-rich, Zr-rich compounds and/or eutectic phases. The microstructure of the repair area is close to that of the base material, can withstand the high-temperature working environment of the blade, and the mechanical property strength of the joint is high;
2. Compared with the existing fusion-welding technology, the process disclosed by the present invention has the beneficial effect of avoiding the cracking and deformation of the thin-wall of the blade caused by high heat input; compared with the existing large-gap brazing or powder-metallurgy repair technology, the beneficial effect is to avoid a large amount of liquid phase flowing into the blade air passage during the metallurgical process, causing air-passage blockage; it effectively solves the problem that it is difficult to repair the thin-wall through defects of nickel-based superalloy blades.

### Brief Description of the Drawings

The present invention will be described in combination with embodiments and accompanying drawings, wherein:
Fig. 1 shows the microstructure of the DFX-M pre-made part provided by the present invention;
Fig. 2 is the schematic diagram of the thin-wall through defect of the N1 guide vane provided by the present invention;
Fig. 3 is the schematic diagram of step S1 in the process provided by the present invention;
Fig. 4 is the schematic diagram of step S2 or S3 in the process provided by the present invention;
Fig. 5 is the schematic diagram of step S4 in the process provided by the present invention;
Fig. 6 is the schematic diagram of step S5 in the process provided by the present invention;
Fig. 7 shows the microstructure of the repair area obtained by repairing the thin-wall through defect of the N1 guide vane by the present invention.

Markings in the figures: 1 - thin wall; 2 - air passage; 3 - substrate; 4 - through defect; 5 - groove; 6 - pre-made part.

### Detailed Description of Embodiments

All of the features disclosed in the Description, or all of the steps of any method or process so disclosed, may be combined in any way, except combinations where such features and/or steps are mutually exclusive.

Any feature disclosed in the Description can be replaced with other equivalent or similar features, unless otherwise specified. That is, each feature is only an example of series of equivalent or similar features, unless otherwise specified.

### Embodiment 1

An activator for repairing thin-wall through defects, the preparation of the activator comprises elements in at least the following percentages by mass:
Cr (7.1%-9.8%), Co (15.2%-19.8%), Al (2.5%-4.3%), W (0.2-1.7), Ti (6.2%-8.7%), Ta (5.6%-7.8%), Mo (5.6%-8.8%), Ru (2.7%-4.2%), Hf (5.6%-7.8%), Zr (0.07%-0.15%), C (0.10%-0.15%), Sc (0.01%-0.05%), balance Ni and/or incidental impurities.

In the present embodiment, the activator is in powder form, with a particle size ranging from 30 µm to 53 µm, and can be prepared by an atomization method; the melting-temperature range is from 1,130°C to 1,160°C.

It should be noted that the atomization method is a conventional method in the art, and no further elaboration will be made here.

Furthermore, to clearly elaborate and illustrate the technical solution of the present invention, the following non-restrictive implementations of the activator are provided. See Table 1 in detail. The following element content data are all mass percentage data.

**Table 1 Implementations of the activator**

| | Brand of the activator | | | |
|---|---|---|---|---|
| | DFB-P | DFB-U | DFB-A | DFB-G |
| Ni | Bal. | Bal. | Bal. | Bal. |
| Cr | 9.8 | 7.2 | 9.6 | 8.7 |
| Co | 15.7 | 18.1 | 19.8 | 17.1 |
| Al | 4.3 | 3.8 | 2.5 | 3.0 |
| W | 1.7 | 0.2 | 1.0 | 0.8 |
| Ti | 7.2 | 8.7 | 6.2 | 6.9 |
| Ta | 7.8 | 5.9 | 6.5 | 5.6 |
| Mo | 7.6 | 5.6 | 8.8 | 6.9 |
| Ru | 3.0 | 2.7 | 4.2 | 2.8 |
| Hf | 6.4 | 5.6 | 7.5 | 7.8 |
| Zr | 0.10 | 0.07 | 0.15 | 0.11 |
| C | 0.15 | 0.10 | 0.12 | 0.11 |
| Sc | 0.01 | 0.01 | 0.05 | 0.01 |
| Melting point | 1140°C | 1130°C | 1160°C | 1150°C |

According to the aforementioned implementations of the activator, it can be known that compared with traditional repair materials, the activator of the present embodiment does not use the addition of high-concentration B, Si, and Zr as melting-point depressants. Instead, it achieves high-entropy alloying by adjusting the mass ratio between the strengthening elements of the superalloy, thereby suppressing the melting point of the activator within the range allowed by the process. Therefore, when the activator of the present invention is used to repair defects, the obtained repair area does not contain low-melting-point B-rich, Si-rich, Zr-rich compounds and/or eutectic phases. The microstructure of the repair area is close to that of the base material, which can withstand the high-temperature working environment of the blade, and the mechanical property strength of the joint is high.

### Embodiment 2

A pre-made paste for repairing thin-wall through defects, to further clearly elaborate and illustrate the technical solution of the present invention, the following non-restrictive implementations of the activator are provided.

The first implementation: Prepare the DFX-M pre-made paste.

### Materials selection:

Activator: the activator with the brand DFB-P in Embodiment 1; curing agent: M-21 commercial alloy powder; binder: NICROBRAZ S-BINDR commercial type;
wherein: the M-21 commercial alloy powder, with a particle size ranging from 85 µm to 106 µm, has a nominal chemical composition of:
C (0.13wt%), B (0.02wt%), Cr (5.7wt%), Mo (2.0wt%), Al (6.0wt%), W (11.0wt%), Nb (1.5wt%), Zr (0.12wt%), balance Ni and/or incidental impurities.

Material usage: The weight of the activator powder accounts for 40%, the mass of the binder accounts for 4%, and the balance is the curing agent.

The paste prepared by uniformly mixing the aforementioned amounts of the activator, curing agent, and binder is used as the pre-made paste for making the corresponding DFX-M pre-made parts.

The second implementation: Prepare the DFX-Y pre-made paste.

Materials selection:
Activator: The activator with the brand DFB-A in Embodiment 1; curing agent: Mar-M004 commercial alloy powder, binder: NICROBRAZ S-BINDR commercial type;
wherein: The Mar-M004 commercial alloy powder, with a particle size ranging from 85 µm to 106 µm, has a composition of:
   C (0.05wt%), Cr (12.0wt%), Mo (4.5wt%), Nb (2.0wt%), Al (5.9wt%), Ti (0.6wt%), Hf (1.3wt%), Zr (0.05wt%), B (0.015wt%).

Material usage: The weight of the activator powder accounts for 40%, the mass of the binder accounts for 3.5%, and the balance is the curing agent.

The paste prepared by uniformly mixing the aforementioned amounts of the activator, curing agent, and binder is used as the pre-made paste for making the corresponding DFX-Y pre-made parts.

### Embodiment 3

A pre-made part for repairing thin-wall through defects, to further clearly elaborate and illustrate the technical solution of the present invention, the following non-restrictive implementations of the activator are provided.

The first implementation: Prepare the DFX-M pre-made part.

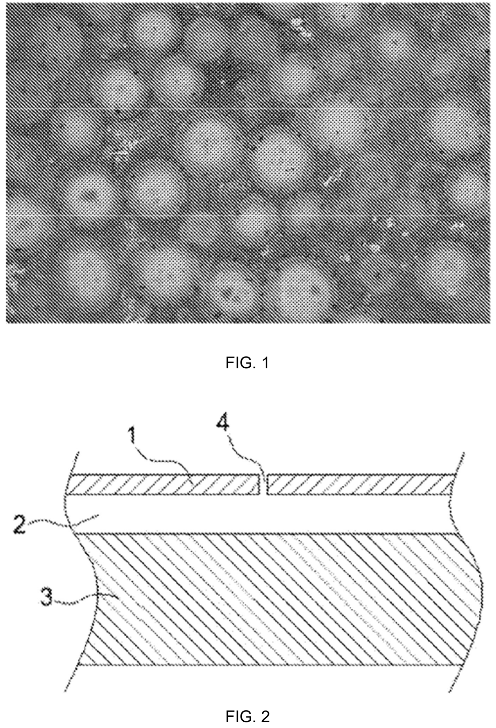

Place the DFX-M pre-made paste in embodiment 2 in a ceramic mold, spread it evenly with a thickness of about 5 mm; then perform sintering in a vacuum furnace with a vacuum degree better than 1×10⁻³ Pa. The sintering temperature is 1,150°C, and the sintering time is 10 minutes; after sintering is completed, lower the temperature in the vacuum furnace to 1,050°C for hot isostatic pressing treatment. The pressure in the vacuum furnace is 15 MPa, and after the heat-preservation time of 30 minutes, cool with the furnace to obtain a pre-made part 6 with a thickness of about 3 mm. The microstructure of the DFX-M pre-made part is shown in Fig. 1.

The second implementation: Prepare the DFX-Y pre-made part.

Place the DFX-Y pre-formed paste in Embodiment 2 into a ceramic mold, spread it evenly with a thickness of about 5mm; then perform sintering in a vacuum furnace with a vacuum degree better than 1×10⁻³ Pa. The sintering temperature is 1,170°C, and the sintering time is 10 minutes; after sintering is completed, lower the temperature in the vacuum furnace to 1,000°C for hot isostatic pressing treatment. The pressure in the vacuum furnace is 20 MPa, and after the heat-preservation time of 30 minutes, cool with the furnace to obtain a pre-made part 6 with a thickness of about 3 mm.

### Embodiment 4

A process for repairing thin-wall through defects, to further clearly elaborate and illustrate the technical solution of the present invention, taking the first-stage turbine guide vane N1 for a 50MW heavy-duty gas turbine as an example, the details are as follows.

The N1 guide vane is a hollow vane, which has a substrate 3 and a thin wall 1. There is an air passage 2 between the thin wall 1 and the substrate 3. The defect penetrates the thin wall 1 to form a through defect 4. The base material of the thin wall 1 is Mar-M247 precipitation-strengthened nickel-based cast superalloy, and its nominal chemical composition is:
Ni-8wt%Cr-10wt%Co-10wt%W-5.5wt%Al-1wt%Ti-3wt%Ta-1.5wt%Hf-0.6wt%Mo-0.15wt%C-0. 015wt%B-0.03wt%Zr.

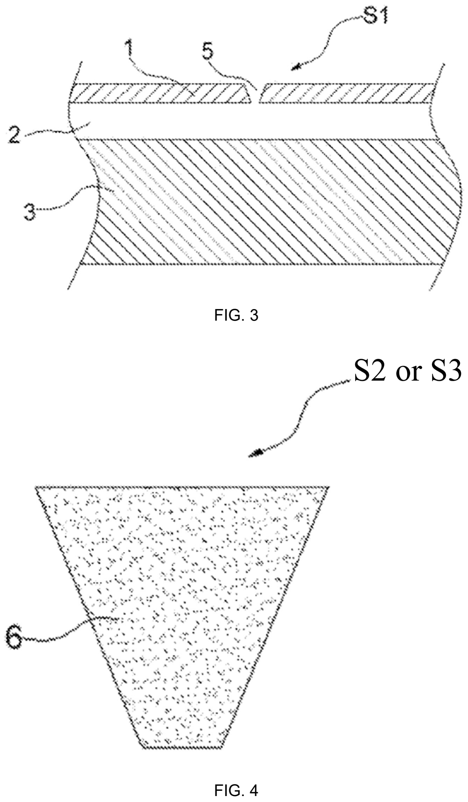

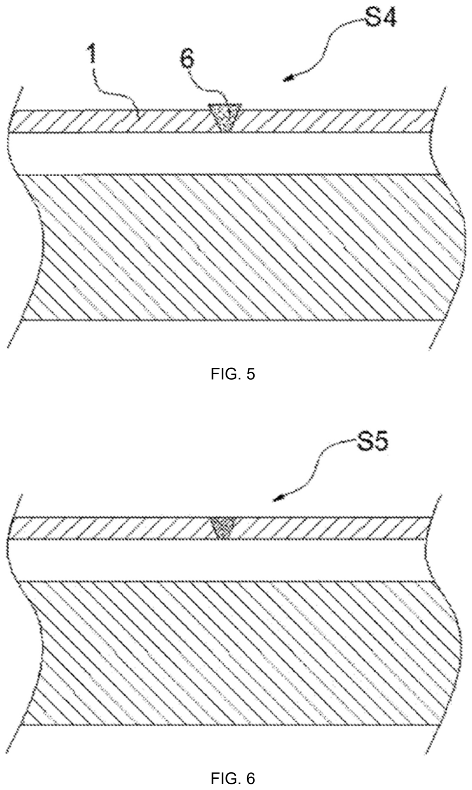

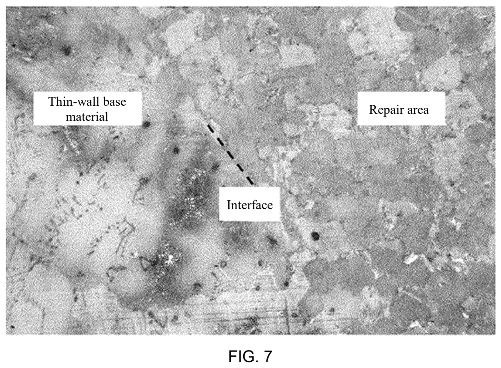

As shown in Fig. 2 to Fig. 7, the repair process is completed through the following steps. See steps S1 to S5 in detail.

### S1: Defect grinding;

Mechanically grind the through defect 4 on the thin wall 1 of the N1 guide vane to remove the oxide layer. At the same time, grind the thin wall 1 around the through defect 4 into a groove 5 with a slope of 45°. The large-diameter end of the groove 5 is located on the outer surface of the N1 guide vane, and the small-diameter end of the groove 5 is located on the inner wall of the cavity of the N1 guide vane. The length × width of the ground groove 5 is 10mm×2mm, and the thickness of the thin wall 1 at the groove 5 is 2.2mm. After grinding, place it in alcohol for ultrasonic cleaning for 60 minutes, then take it out and blow-dry it for later use.

S2: Pre-made part forming; use the description in Embodiment 3 to make the DFX-M pre-made part.

### S3: Pre-made part shaping;

According to the geometric dimensions of the groove 5 in step S1, grind the DFX-M pre-made part 6 in Embodiment 3. The thickness of the pre-made part 6 after shaping is 2.7mm. The lower surface of the pre-made part 6 is flush with the inner wall of the cavity at the defect of the vane. Then place the ground and pre-made part 6 after shaping in an alcohol solution for ultrasonic cleaning for 60 minutes, take it out, blow-dry, and set it aside for later use.

### S4: Defect material addition;

Assemble the pre-made part 6 after shaping in step S2 to the groove 5 in step S1. The large-diameter end of the groove 5 is 0.5mm higher than the outer surface of the N1 guide vane. Then, conduct metallurgical heat-preservation in a vacuum furnace with a vacuum degree better than 1×10⁻³Pa. The heat-preservation temperature is 1210°C, and the heat-preservation time is 50min. After heat-preservation, cool it with the furnace.

### S5: Post-treatment;

After the metallurgical heat preservation and cooling are completed, perform performance recovery heat treatment on the vane, and remove the excess metal in the repair area by shaping, and then the morphological and property remodeling of the through defect 4 on the thin wall 1 of the N1 guide vane can be completed.

After the repair is completed, make the joint of the repair area into a tensile specimen. The tensile strength at room temperature is measured to be 795MPa, reaching 80.3% of the strength of the base material; the high-temperature tensile strength at 900°C reaches 473MPa, reaching 70.1% of the strength of the base material.

In summary, compared with the existing alkylation welding technology, the process disclosed in the present embodiment does not use the welding method, thus avoiding the cracking and deformation of the thin wall 1 of the vane caused by high heat input. Compared with the existing large-gap brazing or powder metallurgy repair technology, by pre-fabricating the pre-made part 6 used for repair and the constraint of the groove 5, a large amount of liquid phase flowing into the air passage 2 during the metallurgical process is avoided, preventing the blockage of the air passage 2. That is, it effectively solves the problem that the through defect 4 of the thin wall 1 of the nickel-based superalloy vane is difficult to repair.

The present invention is not limited to the detailed description of the implementations mentioned above. The present invention expands to any new feature or any new combination disclosed in the Description, and steps in any new method or process or any new combination disclosed.

## Claims

1. An activator for repairing thin-wall through defects, wherein the preparation of the activator comprises elements in at least the following percentages by mass:
Cr (7.1%-9.8%), Co (15.2%-19.8%), Al (2.5%-4.3%), W (0.2-1.7%), Ti (6.2%-8.7%), Ta (5.6%-7.8%), Mo (5.6%-8.8%), Ru (2.7%-4.2%), Hf (5.6%-7.8%), Zr (0.07%-0.15%), C (0.10%-0.15%), Sc (0.01%-0.05%), balance Ni and/or incidental impurities.

2. The activator according to claim 1, wherein the preparation of the activator comprises elements in at least the following percentages by mass:
Cr (9.8%), Co (15.7%), Al (4.3%), W (1.7%), Ti (7.2%), Ta (7.8%), Mo (7.6%), Ru (3.0%), Hf (6.4%), Zr (0.10%), C (0.15%), Sc (0.01%), balance Ni and/or incidental impurities.

3. The activator according to claim 1, wherein the preparation of the activator comprises elements in at least the following percentages by mass:
Cr (7.2%), Co (18.1%), Al (3.8%), W (0.2%), Ti (8.7%), Ta (5.9%), Mo (5.6%), Ru (2.7%), Hf (5.6%), Zr (0.07%), C (0.10%), Sc (0.01%), balance Ni and/or incidental impurities.

4. The activator according to claim 1, wherein the preparation of the activator comprises elements in at least the following percentages by mass:
Cr (9.6%), Co (19.8%), Al (2.5%), W (1.0%), Ti (6.2%), Ta (6.5%), Mo (8.8%), Ru (4.2%), Hf (7.5%), Zr (0.15%), C (0.12%), Sc (0.05), balance Ni and/or incidental impurities.

5. The activator according to claim 1, wherein the preparation of the activator comprises at least the following elements by mass percentage:
Cr (8.7%), Co (17.1%), Al (3.0%), W (0.8%), Ti (6.9%), Ta (5.6%), Mo (6.9%), Ru (2.8%), Hf (7.8%), Zr (0.11%), C (0.11%), Sc (0.01%), balance Ni and/or incidental impurities.

6. The activator according to claim 1, wherein the melting point temperature of the activator is between 1,131°C to 1,160°C.

7. The activator according to claim 1, wherein the activator is in powder form, with a particle size ranging from 30 µm to 53 µm, and is prepared by the atomization method.

8. A pre-made paste for repairing thin-wall through defects, wherein the pre-made paste is in paste form, and is prepared by mixing the activator for repairing thin-wall through defects according to any one of claims 1-7, a curing agent, and a binder in the required proportion.

9. The pre-made paste according to claim 8, wherein the curing agent is M-21 or Mar-M004 commercial alloy powder with a particle size ranging from 85 µm to 106 µm; the binder is of the NICROBRAZ S-BINDR commercial type; wherein:
The mass of the activator accounts for 40% to 50%, the mass of the binder accounts for 3% to 5%, and the balance is the curing agent.

10. A pre-made part for repairing thin-wall through defects, wherein a mold is used to make the pre-made paste for repairing thin-wall through defects according to claim 8 or 9 into a pre-made part (6).

11. The pre-made part according to claim 10, wherein the mold filled with the pre-formed paste is placed in a vacuum environment for sintering. The sintering temperature is 1,140°C to 1,170°C, and the sintering time is 10min to 15min. After sintering, the ambient temperature is lowered to 1,000°C to 1,050°C for hot isostatic pressing treatment. The ambient pressure for hot isostatic pressing treatment is 10MPa to 20MPa, and the heat-preservation time for hot isostatic pressing treatment is 30min to 60min. After hot isostatic pressing treatment, the pre-made part (6) if formed after cooling with the furnace.

12. The pre-made part according to claim 11, wherein the vacuum environment is provided by a vacuum furnace, and the vacuum degree of the vacuum environment is better than 1×10⁻³Pa.

13. A process for repairing thin-wall through defects, **characterized by** comprising the following steps:
S1: Defect grinding;
Grind the through defect (4) area to make the through defect (4) area form a groove (5), clean and blow-dry for later use;
S2: Pre-made part forming; make the pre-made part for repairing thin-wall through defects according to claim 11 or 12;
S3: Pre-made part shaping;
According to the specific dimensions of the groove (5) formed after grinding the through defect (4) in step S1, grind and shape the pre-made part (6) to match the shape and size of the groove (5), and the upper surface of the pre-made part (6) is 0.5mm-1mm higher than the surface of the groove (5), clean and blow-dry for later use;
S4: Defect material addition;
Assemble the pre-made part (6) that has been shaped in step S3 to the groove (5) in step S1, and then perform metallurgical heat preservation in a vacuum environment. After the heat preservation is completed, cool it with the furnace;
S5: Post-treatment;
After the cooling in step S4 is completed, perform performance recovery heat treatment, and remove the excess metal in the repair area by shaping, and then the morphological and property remodeling can be completed.

14. The process according to claim 13, wherein the slope of the groove (5) in step S1 is less than 60°.

15. The process according to any one of claims 13 to 14, wherein the process is used to repair the thin-wall through defects on the hollow thin-wall blade, with the substrate being a precipitation-strengthened nickel-based cast superalloy.

16. The process according to claim 15, wherein the vacuum degree of the vacuum environment is better than 1×10-³Pa.

17. The process according to claim 15, wherein the metallurgical heat-preservation temperature is 1,190°C to 1,210°C, and the heat-preservation time is 45 minutes to 60 minutes.
